# EUROPEAN PATENT SPECIFICATION

(11) **EP 3 919 865 B1**
(45) Date of publication and mention of the grant of the patent: **23.08.2023**
(21) Application number: 21176245.5
(22) Date of filing: 27.05.2021
(51) Int. Cl.: G01C 21/34, G01C 21/36, B60L 58/12, B60L 58/24, B60W 20/12, B60L 53/68, B60W 50/00, B60W 50/08

(54) **TRAVEL ROUTE GUIDANCE DEVICE**
VORRICHTUNG ZUR REISEROUTENFÜHRUNG
DISPOSITIF DE GUIDAGE DE TRAJET DE DÉPLACEMENT

(30) Priority: 02.06.2020 JP 2020096334
(43) Date of publication of application: 08.12.2021
(73) Proprietor: Toyota Jidosha Kabushiki Kaisha, Aichi 471-8571 (JP)
(72) Inventor: MIYAZATO, Yoshiaki, Aichi-ken, 471-8571 (JP); IWASE, Yuji, Aichi-ken, 471-8571 (JP); TABATA, Mitsuhiro, Aichi-ken, 471-8571 (JP); OTA, Atsuharu, Aichi-ken, 471-8571 (JP)
(74) Representative: D Young & Co LLP

(56) References cited:
- EP-B1- 2 689 982
- DE-A1-102017 004 690
- US-A1- 2015 291 145
- US-A1- 2019 390 970

## Description

### Background of the invention

### 1. Field of the Invention

The present invention relates to a travel route guidance device.

### 2. Description of the Related Art

For example, Patent Document 1 discloses a technique for applying a control program corresponding to the current position of a vehicle, based on the current position thereof.

DE 10 2017 004 690 A1 makes reference to a system for optimizing the pollutant emissions of hybrid vehicles. EP 2 689 982 81 makes reference to hybrid vehicles, especially but not exclusively hybrid electric vehicles (HEVs), and more particularly to control of switching between power sources in HEVs. US 2019/0390970 A1 makes reference to a hybrid electric vehicle and driving control method. US 2015/0291145 A1 makes reference to energy reservation coordination for a hybrid vehicle.

### Prior Art

### Patent Document

Patent Document 1: Japanese Laid-open Patent Publication No. H11-015651

### Problem to be solved by the Invention

Here, an attempt has been made to set a virtual fence (geofence) in advance around a specific area and cause a vehicle to EV travel within the area (hereinafter, "geofencing zone"). For example, with the technique disclosed in JP H11-015651 A, although the corresponding control program is applicable within the geofencing zone, there is a possibility that a vehicle fails to reach the destination depending on the state of charge (SOC) status of the vehicle.

The present invention has been made in view of the above, and an object of the present invention is to provide a travel route guidance device that enables an increase in the possibility that a vehicle succeeds in reaching the destination within a geofencing zone.

### Means for solving the problem

To resolve the above problem and attain the object, a travel route guidance device is provided in accordance with claim 1. Preferred embodiments are set out in the dependent claims.

Thus, even in a case where it is predicted that the vehicle fails to reach the destination within the geofencing zone, searching again for a route more efficient in electric power consumption than the current route can be performed.

In the travel route guidance device according to an embodiment of the present invention, in a case where the route more efficient in electric power consumption than the currently set route is found, the route search unit may set the route.

Thus, the found route can be automatically set, so that the user can save the trouble of selecting the route.

The travel route guidance device according to an embodiment of the present invention, may further include: a display unit displaying various types of information to a driver of the vehicle; and a display control unit controlling the display of the display unit. Further, in a case where the route more efficient in electric power consumption than the currently set route is found by the route search unit, the display control unit may cause the display unit to display the route.

Thus, the user can confirm the route more efficient in electric power consumption than the current route.

The travel route guidance device according to an embodiment of the present invention further includes: a display unit displaying various types of information to a driver of the vehicle; and a display control unit controlling the display of the display unit. Further, in a case where no route more efficient in electric power consumption than the currently set route is found by the route search unit, the display control unit may cause the display unit to display information indicating starting of an engine of the vehicle with a penalty set in advance.

Thus, when no route more efficient in electric power consumption than the current route is found, the effect of starting of the engine of the vehicle can be presented to the user and the user can be asked to confirm the effect.

The travel route guidance device according to an embodiment of the present invention may further include : a display unit displaying various types of information to a driver of the vehicle; and a display control unit controlling the display of the display unit. Further, in a case where no route more efficient in electric power consumption than the currently set route is found by the route search unit, the display control unit may cause the display unit to display information indicating moving out of the geofencing zone with a penalty set in advance.

Thus, when no route more efficient in electric power consumption than the current route is found, the effect of moving out of the geofencing zone can be presented to the user and the user can be asked to confirm the effect.

In the travel route guidance device according to an embodiment of the present invention, in a case where an SOC of the vehicle is lower than a threshold set in advance or a battery temperature of the vehicle is lower than a threshold set in advance, the route determination unit may determine that the vehicle fails to reach the destination in the current state of the vehicle.

Thus, a prediction whether the vehicle succeeds in reaching the destination can be performed, based on the SOC of the vehicle or the battery temperature of the vehicle.

In the travel route guidance device according to the present invention, in the case where the vehicle is EV traveling to the destination within the geofencing zone, the route determination unit determines at every predetermined determination timing, whether the vehicle succeeds in reaching the destination in the current state of the vehicle, and the lower an SOC of the vehicle (20) is or the lower a battery temperature of the vehicle (20) is, the shorter the determination timing is set.

Thus, as the possibility that the vehicle fails to reach the destination is higher, determination is performed at a shorter interval, resulting in a further increase in the possibility that the vehicle succeeds in reaching the destination.

In the travel route guidance device according to an embodiment of the present invention, the vehicle may be a plug-in hybrid vehicle.

Thus, when the vehicle serves as a plug-in hybrid vehicle, even in a case where it is predicted that the vehicle fails to reach the destination within the geofencing zone, searching again for a route more efficient in electric power consumption than the current route can be performed.

### Effect of the Invention

According to the present invention, even in a case where it is predicted that the vehicle fails to reach the destination within the geofencing zone, searching again for a route more efficient in electric power consumption than the current route can be performed, resulting in an increase in the possibility that the vehicle succeeds in reaching the destination.

### Brief Description of the Drawings

FIG. 1 is a block diagram schematically illustrating each configuration of a travel route guidance system including a travel route guidance device according to an embodiment;
FIG. 2 illustrates exemplary information displayed on a display unit when no route more efficient in electric power consumption than the currently set route is found, in the travel route guidance device according to the embodiment;
FIG. 3 illustrates exemplary information displayed on the display unit when it is predicted that a vehicle fails to reach the destination in the current state of the vehicle, in the travel route guidance device according to the embodiment; and
FIG. 4 is an explanatory flowchart of the overview of a travel route guidance method performed by the travel route guidance device according to the embodiment.

### Detailed Description of the preferred embodiments

A travel route guidance device according to an embodiment of the present invention will be described with reference to the drawings. Note that the constituent elements in the following embodiment include those that can be easily replaced by those skilled in the art, or those that are substantially the same.

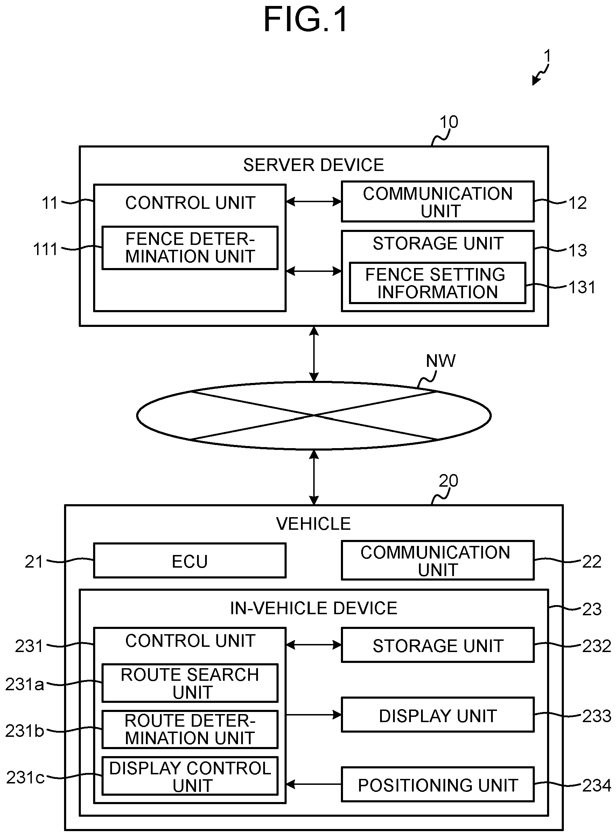

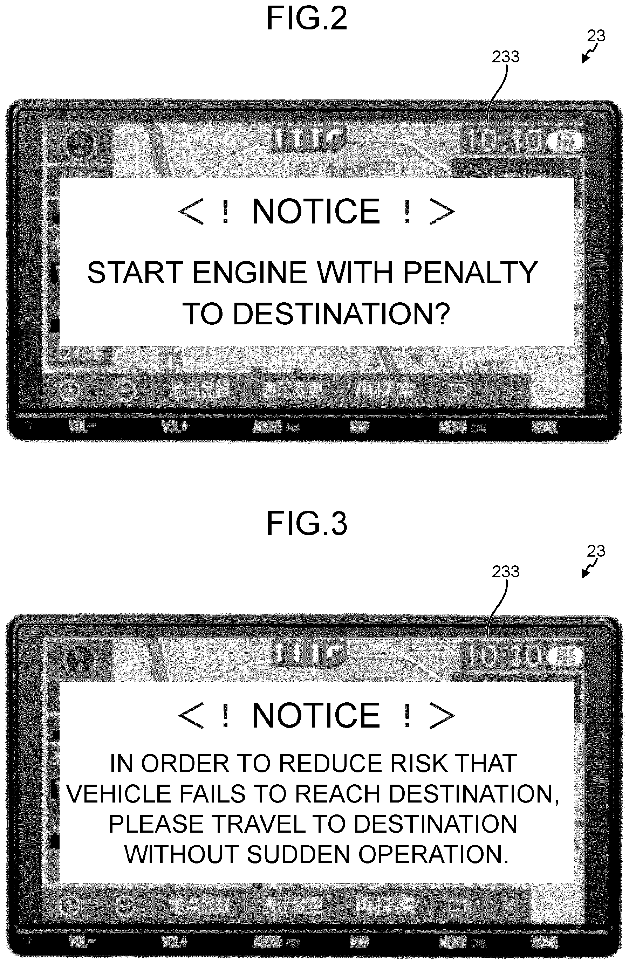

The travel route guidance device according to the embodiment of the present invention will be described with reference to FIGS. 1 and 2. As illustrated in FIG. 1, a travel route guidance system 1 including the travel route guidance device according to the present embodiment includes a server device 10 and a vehicle 20 including an in-vehicle device 23. Specifically, the travel route guidance device according to the present embodiment is achieved by the in-vehicle device 23. In addition, only one vehicle 20 is illustrated in the figure; however, there may be a plurality of vehicles 20.

The server device 10 and the vehicle 20 both have a communication function and are mutually communicable through a network NW. The network NW includes, for example, an internet line network, a mobile phone line network, or the like.

### Travel Route Guidance Device

The server device 10 is a device for performing processing related to a geofencing, based on position information of the vehicle 20 (hereinafter, referred to as "vehicle position information"). The server device 10 is achieved by a general-purpose computer such as a workstation or a personal computer.

Here, in geofencing, a geofencing zone is set in a specific area of the city, and predetermined processing is performed on each vehicle 20 within the geofencing zone. In the following, the description will be given on the premise that each vehicle 20 is caused to perform EV traveling within a geofencing zone set in advance.

As illustrated in FIG. 1, the server device 10 includes a control unit 11, a communication unit 12, and a storage unit 13. Specifically, the control unit 11 includes a processor including a central processing unit (CPU), a digital signal processor (DSP), a field-programmable gate array (FPGA) and the like; and a memory (main storage unit) including a random access memory (RAM), a read only memory (ROM), and the like.

The control unit 11 loads a program stored in the storage unit 13 into a work area of the main storage unit, executes the program, and controls each constituent unit and the like through the execution of the program, resulting in achieving a function meeting a predetermined purpose. Specifically, the control unit 11 functions as a fence determination unit 111 through the execution of the above program.

The fence determination unit 111 determines whether the vehicle 20 has entered the geofencing zone, based on vehicle position information collected from the vehicle 20 through the network NW and fence setting information 131 stored in the storage unit 13. Then, the fence determination unit 111 outputs information related to whether the vehicle 20 has entered the geofencing zone (hereinafter, referred to as "fence determination information") to the vehicle 20 through the network NW.

The communication unit 12 includes, for example, a local area network (LAN) interface board, a wireless communication circuit for wireless communication, and the like. The communication unit 12 is connected to the network NW such as the Internet that is a public communication network. Then, the communication unit 12 communicates with the vehicle 20 in connection with the network NW.

The storage unit 13 includes a recording medium such as an erasable programmable ROM (EPROM), a hard disk drive (HDD), and a removable medium. Examples of the removable medium include a universal serial bus (USB) memory; and a disc recording media such as a compact disc (CD), a digital versatile disc (DVD), and a Blu-ray (registered trademark) disc (BD). The storage unit 13 is storable an operating system (OS), various programs, various tables, various databases and the like.

The storage unit 13 stores the fence setting information 131 including information related to, for example, the range of the geofencing zone. Furthermore, the storage unit 13 may store the vehicle position information and the like as necessary through the network NW, in addition to the fence setting information 131.

### Vehicle

The vehicle 20 is a movable object communicable with the outside, and examples of the vehicle 20 include a hybrid vehicle, a plug-in hybrid vehicle and the like. Furthermore, the vehicle 20 may be either a manually driven vehicle or an automatically driven vehicle.

As illustrated in FIG. 1, the vehicle 20 includes an electronic control unit (ECU) 21, a communication unit 22, and an in-vehicle device 23. The ECU 21 comprehensively controls the operations of various constituent elements mounted on the vehicle 20. The communication unit 22 includes, for example, a data communication module (DCM) and the like, and communicates with the server device 10 by wireless communication through the network NW.

The in-vehicle device 23 includes a control unit 231, a storage unit 232, a display unit 233, and a positioning unit 234. The control unit 231 functions as a route search unit 231a, a route determination unit 231b, and a display control unit 231c through the execution of the program stored in the storage unit 232.

The route search unit 231a searches for a route to the destination set by the user. The route search unit 231a searches for a route to the destination in response to the setting of the destination by the user through the display unit 233 including, for example, a touch panel display and the like. Then, the display control unit 231c described below causes the display unit 233 to display a plurality of routes that has been searched for, and makes the user select a desired route, for example. Note that the "user" refers to an occupant of the vehicle 20 including a driver. In addition, the destination set by the user may be inside or outside the geofencing zone. In addition, the timing at which the user sets the destination is not particularly limited, and thus the destination may be set while the user is inside the geofencing zone or the destination may be set while the user is outside the geofencing zone.

In addition, in a case where the route determination unit 231b described below determines that the vehicle fails to reach the destination with the currently set route, the route search unit 231a searches again for a route more efficient in electric power consumption than the currently set route. Note that "route more efficient in electric power consumption" means a route that does not include a route accompanying degradation in electric power consumption, such as a highway, an uphill road, and a road with sharp undulations and curves. Thus, even in a case where it is predicted that the vehicle fails to reach the destination within the geofencing zone, searching again for a route more efficient in electric power consumption than the current route can be performed, resulting in an increase in the possibility that the vehicle succeeds in reaching the destination.

Furthermore, in a case where a route more efficient in electric power consumption than the currently set route is found, the route search unit 231a may set the route. Thus, the found route can be automatically set, so that the user can save the trouble of selecting the route.

The route determination unit 231b determines whether the vehicle 20 succeeds in reaching the destination in the current state of the vehicle 20, in a case where the vehicle 20 is EV traveling to the destination within the geofencing zone set in advance. In this case, the route determination unit 231b predicts whether the vehicle 20 succeeds in reaching the destination, based on the SOC of the vehicle 20 or the battery temperature of the vehicle 20. That is, the route determination unit 231b determines that the vehicle 20 succeeds in reaching the destination in a case where the SOC of the vehicle 20 is a predetermined threshold set in advance or more or the battery temperature of the vehicle 20 is a threshold set in advance or more, and determines that the vehicle 20 fails to reach the destination in a case where the SOC of the vehicle 20 is lower than the threshold or the battery temperature of the vehicle 20 is lower than the threshold.

According to the invention, the route determination unit 231b determines, at every predetermined determination timing, whether the vehicle 20 succeeds in reaching the destination in the current state of the vehicle 20, in a case where the vehicle 20 is EV traveling to the destination within the geofencing zone. In this case, the route determination unit 231b sets the determination timing shorter as the SOC of the vehicle 20 is lower or the battery temperature of the vehicle 20 is lower. As a result, as the possibility that the vehicle 20 fails to reach the destination is higher, determination is performed at a shorter interval, resulting in a further increase in the possibility that the vehicle 20 succeeds in reaching the destination.

The display control unit 231c controls display of the display unit 233. In a case where a route more efficient in electric power consumption than the currently set route is found by the route search unit 231a, the display control unit 231c causes the display unit 233 to display the route. As a result, the user can confirm the route more efficient in electric power consumption than the currently set route.

In addition, in a case where no route more efficient in electric power consumption than the currently set route is found by the route search unit 231a, the display control unit 231c may cause the display unit 233 to display information indicating starting of the engine of the vehicle 20 with a penalty set in advance. Thus, when no route more efficient in electric power consumption than the currently set route is found, the effect of starting of the engine of the vehicle 20 can be presented to the user and the user can be asked to confirm the effect. Furthermore, in this case, the ECU 21 of the vehicle 20 may start the engine in a case where the user consents through the display unit 233 including, for example, the touch panel display and the like.

Note that the "penalty" is a penalty for acts prohibited in a geofencing, and is defined by, for example, the laws and regulations of local governments. Examples of this penalty include payment of taxes and fines; travel restrictions or prohibitions within the geofencing zone; or the like. In addition, "acts prohibited in the geofencing" include, for example, engine traveling within the geofencing zone, moving out of the geofencing zone, and the like.

Furthermore, in a case where no route more efficient in electric power consumption than the currently set route is found by the route search unit 231a, the display control unit 231c may cause the display unit 233 to display information indicating moving out of the geofencing zone with a penalty set in advance. Thus, when no route more efficient in electric power consumption than the currently set route is found, the effect of moving out of the geofencing zone can be presented to the user and the user can be asked to confirm the effect. Furthermore, in this case, the route search unit 231a may set a route outside the geofencing zone in a case where the user consents through the display unit 233 including, for example, the touch panel display and the like.

The display unit 233 includes, for example, a liquid crystal display (LCD), an organic electroluminescent display (OELD) or the like, and displays various types of information to the user, based on control by the display control unit 231c. The display unit 233 displays, for example, the original route that the route search unit 231a has searched for and the route more efficient in electric power consumption that the route search unit 231a has searched again for. Furthermore, as illustrated in FIG. 2, the display unit 233 may display information indicating starting of the engine of the vehicle 20 with a penalty. Still furthermore, the display unit 233 may display information indicating moving out of the geofencing zone.

Still furthermore, when the route determination unit 231b determines that the vehicle 20 fails to reach the destination in the current state of the vehicle 20, for example, as illustrated in FIG. 3, the display unit 233 may display information indicating asking for self-restraint regarding a sudden driving operation that causes degradation in electric power consumption. As a result, such a sudden driving operation by the user can be restricted, resulting in a further increase in the possibility that the vehicle succeeds in reaching the destination.

Note that the display unit 233 may include a touch panel display or the like having an input function for receiving an operation with a user's finger, a pen or the like; and a display function for displaying various types of information, based on control by the control unit 231.

The positioning unit 234 receives radio waves from a global positioning system (GPS) satellite and detects vehicle position information. The method of detecting vehicle position information is not limited to the method with a GPS satellite, and for example, a method with a combination of light detection and ranging/laser imaging detection and ranging (LiDAR), and a three-dimensional digital map may be used. The positioning unit 234 outputs the detected vehicle position information to the server device 10.

### Travel Route Guidance Method

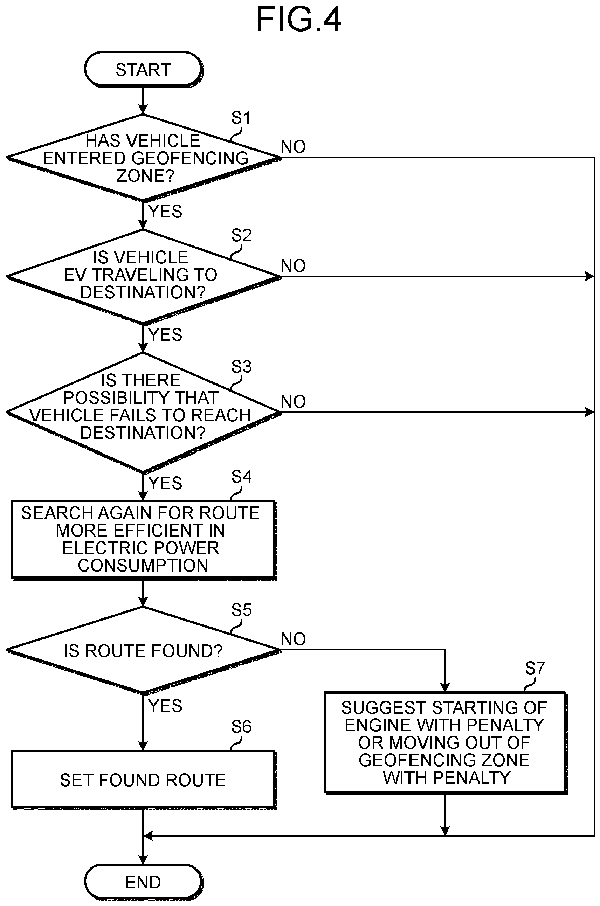

An exemplary processing procedure of the travel route guidance method performed by the travel route guidance device according to the present embodiment will be described with reference to FIG. 4.

First, the route determination unit 231b of the vehicle 20 determines whether the vehicle 20 has entered the geofencing zone (Step S1). Specifically, based on fence determination information acquired from the fence determination unit 111 of the server device 10, the route determination unit 231b determines whether the vehicle 20 has entered the geofencing zone.

In a case where it is determined that the vehicle 20 is out of the geofencing zone (No in Step S1), the route determination unit 231b ends this processing. On the other hand, in a case where it is determined that the vehicle 20 has entered the geofencing zone (Yes in Step S1), the route determination unit 231b determines whether the vehicle 20 is EV traveling to the destination (Step S2). Specifically, in a case where the route to the destination is set by the route search unit 231a and the vehicle 20 is EV traveling following the route, the route determination unit 231b determines that the vehicle 20 is EV traveling to the destination.

In a case where it is determined that the vehicle 20 is not EV traveling to the destination (No in Step S2), the route determination unit 231b ends this processing. On the other hand, in a case where it is determined that the vehicle 20 is EV traveling to the destination (Yes in Step S2), the route determination unit 231b determines whether there is a possibility that the vehicle 20 fails to reach the destination (Step S3). Specifically, the route determination unit 231b determines, based on the SOC of the vehicle 20 or the battery temperature of the vehicle 20, whether there is a possibility that the vehicle 20 fails to reach the destination.

In a case where it is determined that there is no possibility that the vehicle 20 fails to reach the destination (No in Step S3), the route determination unit 231b ends this processing. On the other hand, in a case where it is determined that there is a possibility that the vehicle 20 fails to reach the destination (Yes in Step S3), the route search unit 231a searches again for a route more efficient in electric power consumption than the currently set route (Step S4).

Subsequently, the route search unit 231a determines whether a route more efficient in electric power consumption than the currently set route is found (Step S5). In a case where it is determined that a route more efficient in electric power consumption than the currently set route is found (Yes in Step S5), the route search unit 231a sets the found route (Step S6). As a result, the vehicle 20 travels to the destination following the route that has been searched again for.

In a case where it is determined in Step S5 that no route more efficient in electric power consumption than the currently set route is found (No in Step S5), the display control unit 231c causes the display unit 233 to display information indicating starting of the engine of the vehicle 20 with a penalty or information indicating moving out of the geofencing zone with a penalty for suggesting either piece of information to the user (Step S7), and then ends this processing.

With the travel route guidance device according to the embodiment described above, even in a case where it is predicted that the vehicle fails to reach the destination within the geofencing zone, searching again for a route more efficient in electric power consumption than the currently set route can be performed, resulting in an increase in the possibility that the vehicle succeeds in reaching the destination.

In addition, for example, in response to starting of the engine with a penalty within the geofencing zone, the user may be dissatisfied if the engine automatically start without confirming with the user. However, with the travel route guidance device according to the embodiment can issue notification or request for permission to the user in advance, which enables alleviation of the user's dissatisfaction.

Further effects and modifications can be easily derived by those skilled in the art. Thus, the broader aspects of the present invention are not limited to the particular details and representative embodiment illustrated and described above. Therefore, various modifications may be made without departing from the scope of the general inventive concept as defined by the appended claims.

For example, in the travel route guidance device according to the embodiment, the fence determination unit 111 of the server device 10 determines whether the vehicle 20 has entered the geofencing zone; however, determination whether this vehicle 20 has entered the geofencing zone may be performed at the vehicle 20. That is, the control unit 231 of the in-vehicle device 23 may function as a fence determination unit.

In addition, in the travel route guidance method illustrated in FIG. 4, the description has been given only in the case where the vehicle 20 travels within the geofencing zone; however, the travel route guidance method may be performed in a situation other than the geofencing. In this case, in the travel route guidance method, of Steps S1 to S7 illustrated in the figure, only Steps S2 to S7 are performed and in Step S7, the display control unit 231c causes the display unit 233 to display only information indicating starting of the engine of the vehicle 20. As described above, the travel route guidance method according to the present embodiment can increase the possibility that the vehicle 20 succeeds in reaching the destination even in a situation other than the geofencing.

Furthermore, in the travel route guidance device according to the embodiment, in a case where no route more efficient in electric power consumption than the currently set route is found by the route search unit 231a, the display control unit 231c causes the display unit 233 to display the information indicating starting of the engine of the vehicle 20 with a penalty set in advance or the information indicating moving out of the geofencing zone with a penalty set in advance; however, display may be performed stepwise. In this case, for example, first, the display control unit 231c causes the display unit 233 to display information indicating whether the penalty is allowed, and in a case where the user consents (allows the penalty) through the display unit 233 including the touch panel display and the like, the display control unit 231c causes the display unit 233 to display options such as "start the engine", "move out of the geofencing zone", and the like. Then, the processing selected by the user is performed through the display unit 233. As a result, when no route more efficient in electric power consumption than the currently set route is found, options can be presented to the user, so that processing can be performed based on the user's selection.

### Explanation of Signs

1: TRAVEL ROUTE GUIDANCE SYSTEM
10: SERVER DEVICE
11: CONTROL UNIT
111: FENCE DETERMINATION UNIT
12: COMMUNICATION UNIT
13: STORAGE UNIT
131: FENCE SETTING INFORMATION
20: VEHICLE
21: ECU
22: COMMUNICATION UNIT
23: IN-VEHICLE DEVICE
231: CONTROL UNIT
231A: ROUTE SEARCH UNIT
231B: ROUTE DETERMINATION UNIT
231C: DISPLAY CONTROL UNIT
232: STORAGE UNIT
233: DISPLAY UNIT
234: POSITIONING UNIT
NW: NETWORK

## Claims

1. A travel route guidance device comprising:
a route determination unit (231b) configured to determine, in a case where a vehicle (20) is traveling in an electric power consumption mode to a destination within a geofencing zone set in advance, whether the vehicle (20) succeeds in reaching the destination in a current state of the vehicle (20); and
a route search unit (231a) configured to search for, in a case where the route determination unit (231b) determines that the vehicle (20) fails to reach the destination, a route more efficient in electric power consumption than a currently set route,
**characterized in** the case where the vehicle (20) is traveling in an electric power consumption mode to the destination within the geofencing zone, the route determination unit (231b) determines, at every predetermined determination timing, whether the vehicle (20) succeeds in reaching the destination in the current state of the vehicle (20), and
the lower the state of charge of the vehicle (20) is or the lower a battery temperature of the vehicle (20) is, the shorter the predetermined determination timing is set.

2. The travel route guidance device according to claim 1, wherein in a case where the route more efficient in electric power consumption than the currently set route is found, the route search unit (231a) sets the route.

3. The travel route guidance device according to claim 1, further comprising:
a display unit (233) configured to display various types of information to a driver of the vehicle (20); and
a display control unit (231c) configured to control the display of the display unit (233),
wherein in a case where the route more efficient in electric power consumption than the currently set route is found by the route search unit (231a), the display control unit (231c) causes the display unit (233) to display the route.

4. The travel route guidance device according to claim 1, further comprising:
a display unit (233) configured to display various types of information to a driver of the vehicle (20); and
a display control unit (231c) configured to control the display of the display unit (233),
wherein in a case where no route more efficient in electric power consumption than the currently set route is found by the route search unit (231a), the display control unit (231c) causes the display unit (233) to display information indicating starting of an engine of the vehicle (20) with a penalty set in advance.

5. The travel route guidance device according to claim 1, further comprising:
a display unit (233) configured to display various types of information to a driver of the vehicle (20); and
a display control unit (231c) configured to control the display of the display unit (233),
wherein in a case where no route more efficient in electric power consumption than the currently set route is found by the route search unit (231a), the display control unit (231c) causes the display unit (233) to display information indicating moving out of the geofencing zone with a penalty set in advance.

6. The travel route guidance device according to any one of claims 1 to 5, wherein in a case where the state of charge of the vehicle (20) is lower than a threshold set in advance or a battery temperature of the vehicle (20) is lower than a threshold set in advance, the route determination unit (231b) determines that the vehicle (20) fails to reach the destination in the current state of the vehicle (20).

7. The travel route guidance device according to any one of claims 1 to 6, wherein the vehicle (20) is a plug-in hybrid vehicle.

## Patentansprüche

1. Fahrroutenführungsvorrichtung, umfassend:
eine Routenbestimmungseinheit (231b), die dazu ausgelegt ist, in einem Fall, dass ein Fahrzeug (20) in einem elektrischen Leistungsaufnahmemodus zu einem vorab festgelegten Ziel in einer Geofencing-Zone fährt, zu bestimmen, ob es das Fahrzeug (20) schafft, das Ziel in einem derzeitigen Zustand des Fahrzeugs (20) zu erreichen; und
eine Routensucheinheit (231a), die dazu ausgelegt ist, in einem Fall, dass die Routenbestimmungseinheit (231b) bestimmt, dass es das Fahrzeug (20) nicht schafft, das Ziel zu erreichen, nach einer Route zu suchen, die in der elektrischen Leistungsaufnahme effizienter als eine derzeit festgelegte Route ist,
**dadurch gekennzeichnet, dass** in dem Fall, dass das Fahrzeug (20) in einem elektrischen Leistungsaufnahmemodus zu dem Ziel in der Geofencing-Zone fährt, die Routenbestimmungseinheit (231b) zu jeder vorbestimmten Bestimmungszeit bestimmt, ob es das Fahrzeug (20) schafft, das Ziel in dem derzeitigen Zustand des Fahrzeugs (20) zu erreichen, und
je niedriger der Ladezustand des Fahrzeugs (20) ist oder je niedriger eine Batterietemperatur des Fahrzeugs (20) ist, desto kürzer die vorbestimmte Bestimmungszeit festgelegt wird.

2. Fahrroutenführungsvorrichtung nach Anspruch 1, wobei in einem Fall, dass die Route, die in der elektrischen Leistungsaufnahme effizienter als die derzeit festgelegte Route ist, gefunden wird, die Routensucheinheit (231a) die Route festlegt.

3. Fahrroutenführungsvorrichtung nach Anspruch 1, ferner umfassend:
eine Anzeigeeinheit (233), die dazu ausgelegt ist, verschiedene Arten von Informationen einem Fahrer des Fahrzeugs (20) anzuzeigen; und
eine Anzeigesteuereinheit (231c), die dazu ausgelegt ist, die Anzeige der Anzeigeeinheit (233) zu steuern,
wobei in einem Fall, dass die Route, die in der elektrischen Leistungsaufnahme effizienter als die derzeit festgelegte Route ist, durch die Routensucheinheit (231a) gefunden wird, die Anzeigesteuereinheit (231c) die Anzeigeeinheit (233) veranlasst, die Route anzuzeigen.

4. Fahrroutenführungsvorrichtung nach Anspruch 1, ferner umfassend:
eine Anzeigeeinheit (233), die dazu ausgelegt ist, verschiedene Arten von Informationen einem Fahrer des Fahrzeugs (20) anzuzeigen; und
eine Anzeigesteuereinheit (231c), die dazu ausgelegt ist, die Anzeige der Anzeigeeinheit (233) zu steuern,
wobei in einem Fall, dass keine Route, die in der elektrischen Leistungsaufnahme effizienter als die derzeit festgelegte Route ist, durch die Routensucheinheit (231a) gefunden wird, die Anzeigesteuereinheit (231c) die Anzeigeeinheit (233) veranlasst, Informationen anzuzeigen, die ein Starten einer Kraftmaschine des Fahrzeugs (20) mit einer vorab festgelegten Strafe anzeigen.

5. Fahrroutenführungsvorrichtung nach Anspruch 1, ferner umfassend:
eine Anzeigeeinheit (233), die dazu ausgelegt ist, verschiedene Arten von Informationen einem Fahrer des Fahrzeugs (20) anzuzeigen; und
eine Anzeigesteuereinheit (231c), die dazu ausgelegt ist, die Anzeige der Anzeigeeinheit (233) zu steuern,
wobei in einem Fall, dass keine Route, die in der elektrischen Leistungsaufnahme effizienter als die derzeit festgelegte Route ist, durch die Routensucheinheit (231a) gefunden wird, die Anzeigesteuereinheit (231c) die Anzeigeeinheit (233) veranlasst, Informationen anzuzeigen, die ein Herausbewegen aus der Geofencing-Zone mit einer vorab festgelegten Strafe anzeigen.

6. Fahrroutenführungsvorrichtung nach einem der Ansprüche 1 bis 5, wobei in einem Fall, dass der Ladezustand des Fahrzeugs (20) niedriger als ein vorab festgelegter Schwellenwert ist oder eine Batterietemperatur des Fahrzeugs (20) niedriger als ein vorab festgelegter Schwellenwert ist, die Routenbestimmungseinheit (231b) bestimmt, dass es das Fahrzeug (20) nicht schafft, das Ziel in dem derzeitigen Zustand des Fahrzeugs (20) zu erreichen.

7. Fahrroutenführungsvorrichtung nach einem der Ansprüche 1 bis 6, wobei das Fahrzeug (20) ein Plug-In-Hybridfahrzeug ist.

## Revendications

1. Dispositif de guidage d'itinéraire de voyage comprenant :
une unité (231b) de détermination d'itinéraire configurée pour déterminer, dans un cas où un véhicule (20) se déplace en mode de consommation d'énergie électrique vers une destination dans une zone de géolocalisation définie à l'avance, si le véhicule (20) réussit à atteindre la destination dans un état actuel du véhicule (20) ; et
une unité (231a) de recherche d'itinéraire configurée pour rechercher, dans un cas où l'unité (231b) de détermination d'itinéraire détermine que le véhicule (20) n'atteint pas la destination, un itinéraire plus efficace en termes de consommation d'énergie électrique qu'un itinéraire actuellement défini,
caractérisé, dans le cas où le véhicule (20) se déplace dans un mode de consommation d'énergie électrique vers la destination à l'intérieur de la zone de géolocalisation, par le fait que
l'unité (231b) de détermination d'itinéraire détermine, à chaque moment de détermination prédéterminé, si le véhicule (20) réussit à atteindre la destination dans l'état actuel du véhicule (20), et
plus l'état de charge du véhicule (20) est bas ou plus la température de la batterie du véhicule (20) est basse, plus le moment de détermination prédéterminée est court.

2. Dispositif de guidage d'itinéraire selon la revendication 1, dans lequel, dans un cas où l'itinéraire plus efficace en termes de consommation d'énergie électrique que l'itinéraire actuellement établi est trouvé, l'unité (231a) de recherche d'itinéraire établit l'itinéraire.

3. Dispositif de guidage d'itinéraire selon la revendication 1, comprenant en outre :
une unité d'affichage (233) configurée pour afficher divers types d'informations à un conducteur du véhicule (20) ; et
une unité (23lc) de commande d'affichage configurée pour commander l'affichage de l'unité d'affichage (233),
dans lequel, dans un cas où l'itinéraire plus efficace en termes de consommation d'énergie électrique que l'itinéraire actuellement défini est trouvé par l'unité (23la) de recherche d'itinéraire, l'unité (231c) de commande d'affichage amène l'unité d'affichage (233) à afficher l'itinéraire.

4. Dispositif de guidage d'itinéraire selon la revendication 1, comprenant en outre :
une unité d'affichage (233) configurée pour afficher divers types d'informations à un conducteur du véhicule (20) ; et
une unité (23lc) de commande d'affichage configurée pour commander l'affichage de l'unité d'affichage (233),
dans lequel, dans un cas où aucun itinéraire plus efficace en termes de consommation d'énergie électrique que l'itinéraire actuellement défini n'est trouvé par l'unité (23la) de recherche d'itinéraire, l'unité (231c) de commande d'affichage amène l'unité d'affichage (233) à afficher des informations indiquant le démarrage d'un moteur du véhicule (20) avec une pénalité définie à l'avance.

5. Dispositif de guidage d'itinéraire selon la revendication 1, comprenant en outre :
une unité d'affichage (233) configurée pour afficher divers types d'informations à un conducteur du véhicule (20) ; et
une unité (23lc) de commande d'affichage configurée pour commander l'affichage de l'unité d'affichage (233),
dans lequel, dans un cas où aucun itinéraire plus efficace en termes de consommation d'énergie électrique que l'itinéraire actuellement défini n'est trouvé par l'unité (23la) de recherche d'itinéraire, l'unité (231c) de commande d'affichage amène l'unité d'affichage (233) à afficher des informations indiquant un déplacement hors de la zone de géolocalisation avec une pénalité définie à l'avance.

6. Dispositif de guidage d'itinéraire de déplacement selon l'une quelconque des revendications 1 à 5, dans lequel dans un cas où l'état de charge du véhicule (20) est inférieur à un seuil fixé à l'avance ou à une température de batterie du véhicule (20) est inférieur à un seuil fixé à l'avance, l'unité (231b) de détermination d'itinéraire détermine que le véhicule (20) ne parvient pas à atteindre la destination dans l'état actuel du véhicule (20).

7. Dispositif de guidage d'itinéraire de déplacement selon l'une quelconque des revendications 1 à 6, dans lequel le véhicule (20) est un véhicule hybride rechargeable.
